# EUROPÄISCHE PATENTSCHRIFT

(11) **EP 2 793 047 B1**
(45) Veröffentlichungstag und Bekanntmachung des Hinweises auf die Patenterteilung: **02.01.2019**
(21) Anmeldenummer: 14156660.4
(22) Anmeldetag: 25.02.2014
(51) Int. Cl.: G01S 13/87, G01S 7/02

(54) **Objektlokalisierung auf einer Fördereinrichtung**
Object localisation on a conveyor device
Localisation d'objet sur un dispositif de convoyage

(30) Priorität: 19.04.2013 DE 102013103972
(43) Veröffentlichungstag der Anmeldung: 22.10.2014
(73) Patentinhaber: SICK AG, 79183 Waldkirch (DE)
(72) Erfinder: Prinz, Dr. Oliver, 79104 Freiburg (DE)
(74) Vertreter: Ludewigt, Christoph

(56) Entgegenhaltungen:
- JP-A- H1 029 717
- JP-A- 2007 230 706
- US-A- 5 485 160
- US-A1- 2008 111 729

## Beschreibung

Die Erfindung betrifft eine Vorrichtung zur Lokalisierung von Objekten auf einer Fördereinrichtung, wobei die Objekte in eine Förderrichtung gefördert werden.

In der Logistik oder der Fabrikautomation werden Waren bzw. Objekte auf Fördereinrichtungen gefördert. Mittels geeigneter Sensoren werden die Objekte auf der Fördereinrichtung erkannt. Derartige Sensoren können optische oder kapazitive Sensoren sein oder wenn die Objekte magnetisch sind, auch magnetische Sensoren.

Aus der Logistikbranche sind einerseits Barcodeleser bekannt, die im optischen Wellenlängenbereich arbeiten und gleichzeitig beim Lesen des Barcodes diesen und damit das Objekt, auf dem der Barcode klebt, lokalisieren können (siehe z.B. EP 1363228 B1). Die Lokalisierung ist hier prinzipiell kein Problem, denn optische Strahlung kann sehr stark gebündelt werden.

Andererseits sind auch sogenannte RFID-Lesegeräte (Radio-Frequency-Identification) bekannt, bei denen das zu erkennende Objekt ein aktives oder passives RFID-Tag trägt, mit dem dann das Lesegerät kommuniziert, bzw. das es ausliest. Damit kann aber nur in dem RFID-Tag kodierte Objektinformation gewonnen werden und keine echte Lokalisierung des Objektes erfolgen, da die RF-Strahlung nicht so wie optische Strahlung gebündelt werden kann und damit prinzipiell keine vernünftige Lokalisierung zulässt. Zwar muss das Objekt im Sende-Empfangsbereich des Lesegerätes sein, worunter aber keine Lokalisierung im Sinne dieser Erfindung verstanden wird, denn der Lesebereich solcher Geräte ist entsprechend der Antennenkonfiguration sehr groß, bzw. erstreckt sich über eine große Förderlänge. Eine Lokalisierung soll also innerhalb eines Sende- bzw. Empfangsbereichs erfolgen, also kleiner als der Lesebereich.

Aus der JP H10 297117 A ist eine Vorrichtung zur Detektion von längsverlaufenden Rissen in einem Förderband für Erze oder dergleichen offenbart, bei der mittels zweier Radareinheiten mit Millimeterstrahlung das Förderband von unten quer zur Förderrichtung abgescannt wird. JP 20072320706 A offenbart ebenfalls eine Vorrichtung zur Erkennung von Längsrissen in einem Förderband, die aber auf optischer Basis arbeitet. Zur Erkennung von Längsrissen wird mit zwei Lasern 2 jeweils eine Linie senkrecht zur Förderrichtung von unten auf das Förderband projiziert. Diese beiden Linien werden mit je einer Kamera erfasst. Aus den Kamerabildern der Linien wird mittels eines "image prcessing system" erkannt, ob ein Riss vorliegt oder nicht.

Aus der US 2008/111729 A1 ist ein Radargerät zur Detektion von Objekten hinter einer Wand bekannt, bei dem mehrere CW-Radareinheiten eine Wand mit einem Raum dahinter bestrahlen und aus den mehreren Signalen über Triangulation das Objekt hinter der Wand lokalisieren.

Aus der US 5,485,160 A ist ein Radargerät bekannt, mit dem durch Mehrfachaufnahme des an dem Gerät vorbeigeförderten Objekts eine Form des Objekts erkannt werden kann.

Es ist aber das Bestreben, zumindest in Förderrichtung eine möglichst genaue Lokalisierung zu erreichen, denn dann kann der Abstand zwischen den Objekten verkleinert werden und trotzdem einzelne Objekte erkannt werden, so dass insgesamt mehr Objekte pro Zeit gefördert werden können.

Diese Aufgabe wird gelöst durch eine Vorrichtung mit den Merkmalen des Anspruchs 1.

Die erfindungsgemäße Vorrichtung zur Lokalisierung von Objekten auf einer Fördereinrichtung, wobei die Objekte in eine Förderrichtung gefördert werden, weist einen Sender zur Abstrahlung von elektromagnetischer Strahlung im Radiofrequenzbereich durch eine Sendeantenne und einen Empfänger auf, zum Empfang der an dem Objekt reflektierten Strahlung und Erzeugung von Empfangssignalen. Der Empfänger empfängt die reflektierte Strahlung über wenigstens eine Empfangsantenne, die die Strahlung aus wenigstens zwei spezifischen Empfangskeulen empfängt. Die Empfangssignale aus jeder Empfangskeule sind einzeln erfassbar, wobei die Längsrichtungen der Empfangskeulen quer zur Förderrichtung ausgerichtet sind. Die Empfangskeulen überlappen sich teilweise. Des Weiteren ist eine Auswerteeinrichtung vorgesehen, die eine Lokalisierungseinheit aufweist zum Auswerten der beiden Empfangssignale aus den beiden Empfangskeulen (das Auswerten kann z. B. ein Vergleichen von Empfangssignalen umfassen) und Ermitteln des Zeitpunkts, an dem sich das Objekt im Überlappbereich der beiden Empfangskeulen befindet.

Unter "Radiofrequenzbereich" sollen Frequenzen von etwa 100 MHz bis etwa 150 GHz verstanden werden, also gerade solche Frequenzen, bei denen eine Lokalisierung eines die Strahlung reflektierenden Objektes schwierig ist, weil die Strahlcharakterisitik von Antennen bei diesen Frequenzen sehr große Winkelbereiche umfasst.

Mit der Erfindung ist aber eine Lokalisierung der Objekte in Förderrichtung dennoch möglich. Denn das Objekt befindet sich nur dann im Überlappbereich, wenn Empfangssignale aus beiden Empfangskeulen empfangen werden. Je nach Ausdehnung des Überlappbereichs in Förderrichtung kann die Lokalisierung entsprechend genau sein, auf jeden Fall ist die Lokalisierung genauer als die Ausbreitung der Sende- bzw. Empfangskeule. Darüber hinaus muss das Objekt für eine solche Lokalisierung kein RFID-Tag tragen. Auch durch die Stärke der Empfangssignale kann eine Erhöhung der Genauigkeit der Lokalisierung erfolgen, denn wenn z. B. beide Empfangssignale gleich groß sind, befindet sich das Objekt in der Mitte des Überlappbereichs, sofern die Empfangskeulen symmetrisch ausgebildet sind.

Um eine Objektdetektion mit Radiofrequenzen ohne RFID-Tag nur über Reflektionen zu ermöglichen, muss die Strahlung in geeigneter Weise beeinflusst sein. Es ist bekannt, hierfür die Strahlung pulsförmig auszusenden und die Pulslaufzeit zu messen. Andere als gepulste Modulationsarten, wie Amplitudenmodulation, Phasenmodulation oder Frequenzmodulation sind ebenfalls denkbar. Detektionsmethoden, die auf dem Dopplereffekt beruhen, wie dies bei Dauerstrich-RADAR (CW) der Fall ist, sind eher ungeeignet, da an einer Fördereinrichtung, an der seitlich die erfindungsgemäße Vorrichtung angeordnet ist und quer über die Förderstrecke "schaut", Geschwindigkeitskomponenten in Sende- bzw. Empfangsrichtung klein sind.

In Weiterbildung der Erfindung gibt die Sendeantenne die Strahlung räumlich in Sendekeulen ab und die Sendekeulen sind gleichartig zu den Empfangskeulen ausgebildet und Sende- und Empfangsantenne befinden sich im Wesentlichen am gleichen Ort, so dass die Sende- und Empfangskeulen sich im Wesentlichen vollständig überlappen. Das Aussenden der Strahlung erfolgt also in der gleichen Weise wie der Empfang. Die letztendlich empfangenen Empfangssignale sind dann klar örtlich definiert.

Es ist möglich, den Empfang bzw. die Aussendung aus verschiedenen Empfangs- bzw. Sendekeulen mit nur einer Empfangs- bzw. Sendeantenne zu bewerkstelligen. Das kann z. B. durch mechanisches Schwenken der Antenne erfolgen oder durch Ausbildung der Empfangs- bzw. Sendeantenne mit mehreren Antennenelemente, die jeweils Strahlungsanteile aussenden, wobei die Strahlungsanteile der einzelnen Antennenelemente einen bestimmten Phasenbezug zueinander haben, so dass in Summe Strahlung in einer zugehörigen Empfangs- bzw. Sendekeule empfangen bzw. abgestrahlt wird und so die Empfangs- bzw. Sendekeule eine gewünschte Ausrichtung aufweist. Bekannte und nach der Erfindung eingesetzte Antennen dieser Art sind sogenannte phased-array-Antennen.

Alternativ könnte jeder Empfangs- bzw. Sendekeule eine separate Antenne zugeordnet sein.

In Weiterbildung der Erfindung kann es vorgesehen sein, dass die verschiedenen Empfangs- und/oder Sendekeulen sich durch die Polarisation der Strahlung unterscheiden.

Wenn der zeitliche Verlauf der Empfangssignale aus den einzelnen Empfangskeulen erfasst wird, kann eine Erkennung der Bewegungsrichtung, also der Förderrichtung, erfolgen.

Erfindungsgemäß werden die Empfangsignale aus den verschiedenen Empfangskeulen der Empfangsantenne zeitlich nacheinander erfasst, wobei die Förderbewegung des Objekts langsam ist im Vergleich zur Erfassungrate, so dass eine häufige Erfassung des Objektes beim Durchlaufen einer Empfangskeule erfolgt. Dann sind genauere Aussagen bzgl. des Bewegungsprofils des Objektes möglich.

Vorteilhafterweise liegt die Strahlung im Bereich von 1 GHz bis 150 GHz, was bekannten RADAR-Frequenzen entspricht.

Nachfolgend wird die Erfindung anhand von Ausführungsbeispielen unter Bezugnahme auf die Zeichnung im Einzelnen erläutert. In der Zeichnung zeigen:
- Fig. 1: eine schematische Darstellung eines ersten Ausführungsbeispiels der erfindungsgemäßen Vorrichtung;
- Fig. 2: eine schematische Darstellung der Empfangssignale der einzelnen Empfangskeulen;
- Fig. 3: eine schematische Darstellung eines zweiten Ausführungsbeispiels;
- Fig. 4: eine schematische Darstellung eines dritten Ausführungsbeispiels;
- Fig. 5: eine schematische Darstellung wie Fig. 2 der Empfangssignale nach dem Ausführungsbeispiel aus Fig. 4.

Eine erfindungsgemäße Vorrichtung 10 ist an einer Fördereinrichtung 12 angeordnet. Die Fördereinrichtung 12 fördert Objekte 14 in eine Förderrichtung 16. In der Zeichnung ist das Objekt 14 beispielhaft an drei Positionen P1, P2 und P3 dargestellt, die somit verschiedenen Zeiten entsprechen.

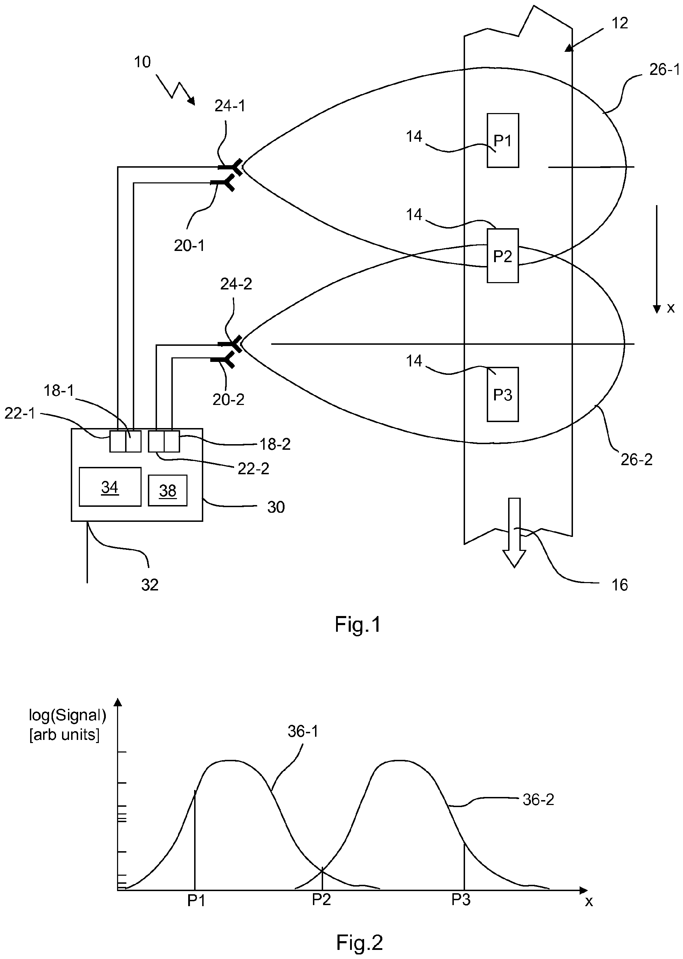

Die Vorrichtung 10 selber weist in einem ersten Ausführungsbeispiel (Fig. 1) zwei Sender 18-1 und 18-2 auf, denen jeweils eine Sendeantenne 20-1 bzw. 20-2 zugeordnet ist. Die von den Sendern abgestrahlte elektromagnetische Strahlung liegt im Radiofrequenzbereich, bevorzugt bei 1 GHz bis 150 GHz. Um eine Objektdetektion mit Radiofrequenzen nur über die Reflektion der Strahlung an dem Objekt 14 zu ermöglichen, muss die Strahlung in geeigneter Weise beeinflusst sein. Es ist bekannt, hierfür die Strahlung pulsförmig auszusenden und die Pulslaufzeit von Antenne zum Objekt und zurück zu messen. Andere bekannte und in der Einleitung erwähnte Detektionsmethoden sind auch denkbar.

Weiter umfasst die Vorrichtung 10 zwei Empfänger 22-1 und 22-2, denen jeweils eine Empfangsantenne 24-1 bzw. 24-2 zugeordnet ist. Die Sendeantenne 20-1 und die Empfangsantenne 24-1 bzw. Sendeantenne 20-2 und Empfangsantenne 24-2 sind einander zugeordnet, was in diesem Zusammenhang bedeutet, dass sie jeweils quasi am gleichen Ort positioniert sind und in die gleiche Richtung abstrahlen bzw. empfangen, so dass ihre zugehörigen Sende- bzw.

Empfangskeulen sich im Wesentlichen vollständig überlappen. In Fig. 1 ist deshalb immer nur eine Empfangskeule 26-1 bzw. 26-2 dargestellt.

Eine Definition einer Sendekeule könnte sein, dass außerhalb der Sendekeule das Sendesignal um z. B. 3dB abgesunken ist. Entsprechend wäre eine Empfangskeule dadurch definiert, dass nur Strahlung innerhalb der Empfangskeule stark genug ist, um im Empfänger entsprechende Empfangssignale zu erzeugen.

Die Sender und Empfänger werden von einer Steuer- und Auswerteeinheit 30 angesteuert. In dieser Auswerteeinheit 30 erfolgen einerseits die Ansteuerung der Sender und andererseits die Auswertung der über die Empfänger erhaltenen Empfangssignale, so dass schließlich an einem Ausgang 32 oder über eine Anzeige 34 ein Objektdetektionssignal ausgegeben werden kann.

Die beiden Empfangskeulen 26-1 und 26-2 sind in diesem Ausführungsbeispiel parallel und mit Abstand in Förderrichtung quer zur Förderrichtung, in diesem Beispiel genau senkrecht, ausgerichtet. Dabei ist der Abstand so gewählt, dass die beiden Empfangskeulen 26-1 und 26-2 sich überlappen.

Aus dieser geometrischen Anordnung der Empfangskeulen 26-1 und 26-2 ergibt sich die Funktion der Vorrichtung 10, wie im Folgenden beschrieben:
Die Empfangssignale aus jeder Empfangskeule 26-1 bzw. 26-2 sind einzeln erfassbar und in Fig. 2 in Abhängigkeit des Weges des Objektes 14 schematisch dargestellt und mit den Bezugsziffern 36-1 bzw. 36-2 bezeichnet.

In der Auswerteeinrichtung 30 ist eine Lokalisierungseinheit 38 vorgesehen, der die Empfangssignale 36-1 und 36-2 zum Auswerten zugeführt werden. Das Auswerten der beiden Empfangssignale aus den beiden Empfangskeulen umfasst ein Vergleichen der Empfangssignale und Ermitteln des Zeitpunkts, an dem sich das Objekt im Überlappbereich der beiden Empfangskeulen befindet. Das ist in dem Beispiel aus Fig. 2 der Zeitpunkt, an dem sich das Objekt 14 an Position P2 befindet. Dies kann dadurch festgestellt werden, dass die beiden Empfangssignale ungleich Null sind. Wenn die Empfangssignale sogar gleich sind, befindet sich das Objekt exakt bei P2. Auf diese Weise kann das Objekt lokalisiert werden, also festgestellt werden, wo es sich auf der Fördereinrichtung 12 befindet, also wie weit es gefördert wurde. Damit ist eine Lokalisierung der Objekte in Förderrichtung möglich. Das Objekt befindet sich nur dann im Überlappbereich, wenn Empfangssignale aus beiden Empfangskeulen empfangen werden. Je nach Ausdehnung des Überlappbereichs in Förderrichtung kann die Lokalisierung entsprechend genau sein, auf jeden Fall ist die Lokalisierung genauer als die Sende- bzw. Empfangskeule.

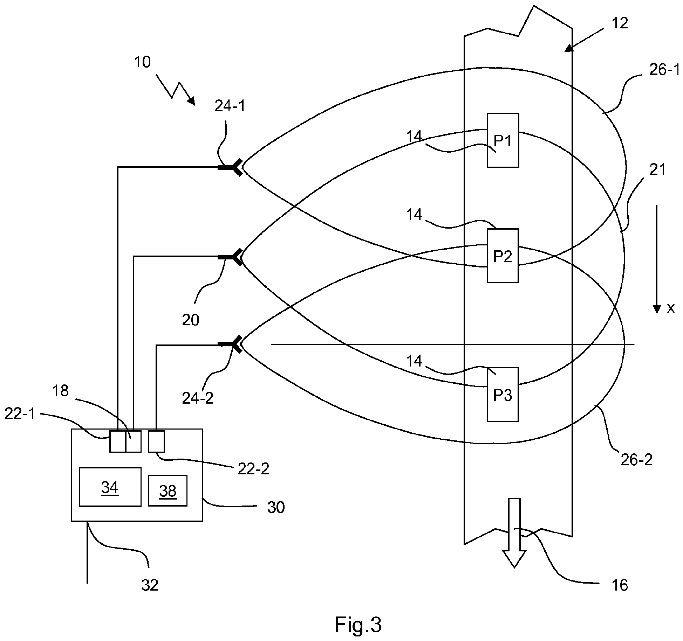

In einer zweiten Ausführungsform (Fig. 3) ist nur ein Sender 18 mit einer Sendeantenne 20 vorgesehen. Ansonsten sind die restlichen Komponenten die gleichen wie nach dem ersten Ausführungsbeispiel aus Fig. 1. Die Sendeantenne 20 ist hier allerdings mittig zwischen den Empfangsantennen 24-1 und 24-2 angeordnet und ihre zugehörige Sendekeule 21 deckt die Positionen P1 bis P3 ab. In dieser Geometrie ist die Funktionsweise wieder die gleiche wie in dem ersten Ausführungsbeispiel, so dass die Fig. 2 auch für das zweite Ausführungsbeispiel zumindest qualitativ den Verlauf der Empfangssignale wiedergibt. Ein Vorteil dieser Ausführungsform wäre, dass die Empfänger mit den Empfangsantennen das reflektierte Signal gleichzeitig aufnehmen und auswerten können, wodurch sich ein zeitlicher Vorteil ergibt.

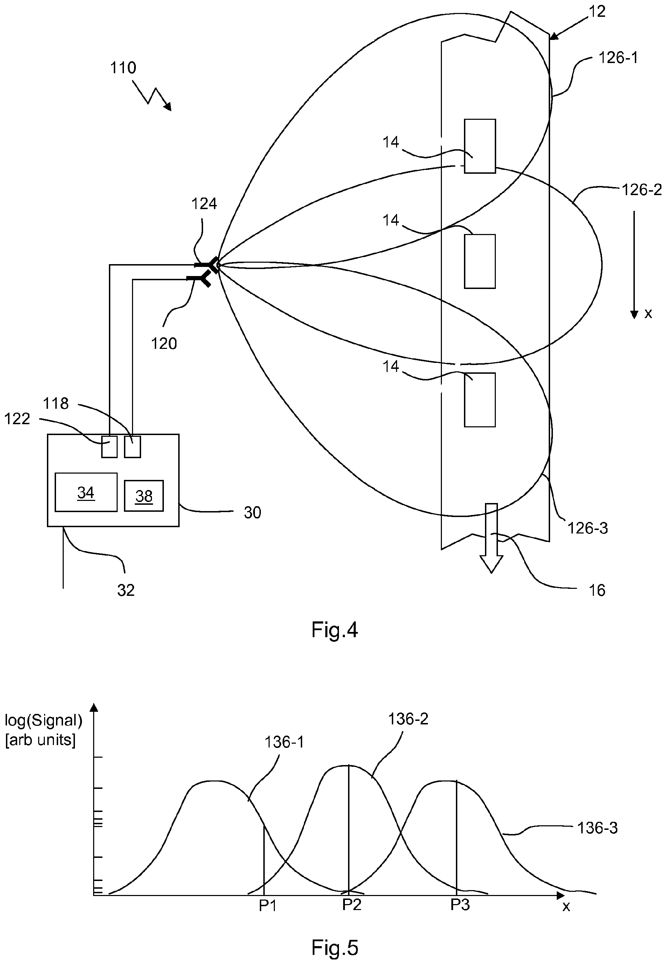

In einer dritten Ausführungsform (Fig. 4 und 5) ist nur eine Sendeantenne 120 und eine Empfangsantenne 124 vorgesehen. Auch hier liegen wieder Sende- und Empfangskeulen im Wesentlichen deckungsgleich übereinander und haben deshalb nur jeweils ein Bezugszeichen 126-1, 126-2 bzw. 126-3. Die unterschiedlichen Sende- bzw. Empfangskeulen 126-1, 126-2 und 126-3 werden hier aber durch eine Sende- bzw. Empfangsantenne 120 bzw. 124 im Zeitmultiplex erzeugt. Das kann entweder durch mechanisches Schwenken der Antenne erfolgen oder durch Ausbildung der Empfangs- bzw. Sendeantenne 120 bzw. 124 mit mehreren Antennenelemente, die jeweils Strahlung aussenden, wobei die Strahlung der einzelnen Antennenelemente einen bestimmten Phasenbezug zueinander haben, so dass in Summe Strahlung in der zugehörigen Empfangs- bzw.

Sendekeule 126-1, 126-2 bzw. 126-3 empfangen bzw. abgestrahlt wird und so die Empfangs- bzw. Sendekeule eine gewünschte Ausrichtung aufweist. Bekannte und bevorzugt eingesetzte Antennen dieser Art sind sogenannte phased-array-Antennen.

Fig. 5 zeigt in gleicher Weise wie Fig. 2 die den Empfangskeulen 126-1, 126-2 bzw. 126-3 entsprechenden Empfangssignale 136-1 (aus Empfangskeule 126-1), 136-2 (aus Empfangskeule 126-2) und 136-3 (aus Empfangskeule 126-3). In ganz ähnlicher Weise wie in dem ersten Ausführungsbeispiel kann jetzt wieder in der Lokalisierungseinheit 38 der Auswerteeinheit 30 die gewünschte Information über den Ort des Objektes, bzw. den Zeitpunkt, an dem das Objekt an dem Ort P2 sich befindet, ermittelt werden. In der in den Fig. 4 und 5 gezeigten Konstellation sind die Kriterien allerdings etwas anders, nämlich die Position P2 ist dann erreicht, wenn die Empfangssignale 136-1 und 136-3 im Wesentlichen gleich Null sind und das Empfangssignal 136-2 maximal ist.

Bevorzugt wird der zeitliche Verlauf der Empfangssignale 136-1, 136-2 bzw. 136-3, also die Verläufe, wie sie sich in Fig. 5 darstellen, aus den einzelnen Empfangskeulen 126-1, 126-2 und 126-3 erfasst. Dann kann nämlich über die Auswerteeinheit eine Erkennung der Bewegungsrichtung erfolgen. Ist die Bewegungsrichtung in Richtung des Pfeiles 16, dann wird bei Fördern des Objektes 14 durch die Empfangskeulen 126-1, 126-2 und 126-3 hindurch zuerst das Signal 136-1 maximal, dann erreicht das Objekt die Position P2, an der das Signal 136-2 maximal wird und schließlich wird das Signal 136-3 maximal.

Für diese Erfassung sollten die Empfangsignale 136-1, 136-2 und 136-3 aus den verschiedenen Empfangskeulen 126-1, 126-2 und 126-3 der Empfangsantenne 124 im Zeitmultiplex nacheinander erfasst werden. Dabei sollte die Förderbewegung des Objekts langsam sein im Vergleich zur Erfassungsrate, so dass eine häufige Erfassung des Objektes beim Durchlaufen einer Empfangskeule erfolgt. Dann sind genauere Aussagen bzgl. des Bewegungsprofils des Objektes möglich.

## Patentansprüche

1. Vorrichtung zur Lokalisierung von Objekten (14) mit einer Fördereinrichtung (12), mit einem Sender (18-1, 18-2; 18; 118) zur Abstrahlung von elektromagnetischer Strahlung im Radiofrequenzbereich durch eine Sendeantenne (20-1, 20-2; 20; 120), mit einem Empfänger (22-1, 22-2; 122) zum Empfang der an dem Objekt reflektierten Strahlung und Erzeugung von Empfangssignalen, mit wenigstens einer als phased-array ausgebildeter Empfangsantenne (24-1, 24-2; 124), die Strahlung aus wenigstens zwei spezifischen Empfangskeulen (26-1, 26-2; 126-1, 126-2, 126-3) empfängt und die Empfangssignale (36-1, 36-2; 136-1, 136-2, 136-3) aus jeder Empfangskeule einzeln erfassbar sind, wobei die Längsrichtungen der Empfangskeulen quer zur Förderrichtung (16) ausgerichtet sind und die Empfangskeulen (26-1, 26-2; 126-1, 126-2, 126-3) sich in Förderrichtung (16) teilweise überlappen und die Empfangsignale (36-1, 36-2; 136-1, 136-2, 136-3) aus den verschiedenen Empfangskeulen der Empfangsantenne (24-1, 24-2; 124) zeitlich nacheinander erfasst werden, wobei die Förderbewegung des Objekts (14) langsam ist im Vergleich zur Erfassungsrate, so dass eine häufige Erfassung des Objektes beim Durchlaufen einer Empfangskeule erfolgt und eine Auswerteeinrichtung (30) vorgesehen ist, die eine Lokalisierungseinheit (38) aufweist zum Auswerten der beiden Empfangssignale (36-1, 36-2; 136-1, 136-2 bzw. 136-3) aus den beiden Empfangskeulen (26-1, 26-2; 126-1, 126-2 bzw. 126-3) und Ermitteln des Zeitpunkts, an dem sich das Objekt (14) im Überlappbereich der beiden Empfangskeulen (26-1, 26-2; 126-1, 126-2 bzw. 126-3) befindet.

2. Vorrichtung nach Anspruch 1, **dadurch gekennzeichnet, dass** die Sendeantenne die Strahlung räumlich in Sendekeulen abgibt und die Sendekeulen gleichartig zu den Empfangskeulen ausgebildet sind und Sende- und Empfangsantenne sich im Wesentlichen am gleichen Ort befinden, so dass die Sende- und Empfangskeulen sich im Wesentlichen vollständig überlappen.

3. Vorrichtung nach einem der vorhergehenden Ansprüche, **dadurch gekennzeichnet, dass** jeder Empfangs- bzw. Sendekeule eine Antenne zugeordnet ist.

4. Vorrichtung nach einem der vorhergehenden Ansprüche, **dadurch gekennzeichnet, dass** die verschiedenen Empfangs- und/oder Sendekeulen sich durch die Polarisation der Strahlung unterscheiden.

5. Vorrichtung nach einem der vorhergehenden Ansprüche, **dadurch gekennzeichnet, dass** der zeitliche Verlauf der Empfangssignale aus den einzelnen Empfangskeulen erfasst wird.

6. Vorrichtung nach einem der vorhergehenden Ansprüche, **dadurch gekennzeichnet, dass** die Empfangs- bzw. Sendeantenne mehrere Antennenelemente aufweist, die jeweils Strahlung aussenden, wobei die Strahlung der Antennenelemente einen bestimmten Phasenbezug zueinander haben, so dass die zugehörige Empfangs- bzw. Sendekeule eine gewünschte Ausrichtung aufweist.

7. Vorrichtung nach einem der vorhergehenden Ansprüche, **dadurch gekennzeichnet, dass** die Strahlung im Bereich von 1 GHz bis 150 GHz liegt.

8. Vorrichtung nach einem der vorhergehenden Ansprüche, **dadurch gekennzeichnet, dass** die Strahlung gepulst, amplitudenmoduliert, phasenmoduliert oder frequenzmoduliert abgestrahlt wird.

## Claims

1. Device for locating objects (14) with a conveying device (12), with a transmitter (18-1, 18-2; 18; 118) for emitting electromagnetic radiation in the radio frequency range by a transmitting antenna (20-1, 20-2; 20; 120), with a receiver (22-1, 22-2; 122) for receiving the radiation reflected at the object and generating received signals, having at least one receiving antenna (24-1, 24-2; 124) in the form of a phased array, which receives radiation from at least two specific receiving lobes (26-1, 26-2; 126-1, 126-2, 126-3) and the received signals (36-1, 36-2; 136-1, 136-2, 136-3) are detectable individually from each receiving lobe, wherein the longitudinal directions of the receiving lobes are aligned transversely to the conveying direction (16) and the receiving lobes (26-1, 26-2; 126-1, 126-2, 126-3) partially overlap in the conveying direction (16) and the received signals (36-1, 36-2; 136-1, 136-2, 136-3) are detected individually from the different receiving lobes of the receiving antenna (24-1, 24-2); 124) successively in time, the conveying movement of the object (14) being slow in comparison with the detection rate, so that the object is detected frequently as it passes through a receiving lobe, and an evaluation device (30) is provided which has a localization unit (38) for evaluating the two received signals (36-1, 36-2; 136-1, 136-2 and 136-3, respectively) from the two receiving lobes (26-1, 26-2; 126-1, 126-2 and 126-3, respectively) and determining the time at which the object (14) is located in the overlap region of the two receiving lobes (26-1, 26-2; 126-1, 126-2 and 126-3, respectively).

2. Device according to claim 1, **characterized in that** the transmitting antenna emits the radiation spatially in transmitting lobes and the transmitting lobes are designed in the same way as the receiving lobes and transmitting and receiving antennas are located essentially at the same location so that the transmitting and receiving lobes overlap essentially completely.

3. Device according to one of the preceding claims, **characterised in that** an antenna is associated with each receiving or transmitting lobe.

4. Device according to one of the preceding claims, **characterized in that** the different receiving and/or transmitting lobes differ in the polarization of the radiation.

5. Device according to one of the preceding claims, **characterized in that** the temporal course of the received signals is detected from the individual receiving lobes.

6. Device according to one of the preceding claims, **characterized in that** the receiving or transmitting antenna has a plurality of antenna elements which each emit radiation, the radiation of the antenna elements having a specific phase relationship to one another, so that the associated receiving or transmitting lobe has a desired orientation.

7. Device according to one of the preceding claims, **characterized in that** the radiation lies in the range from 1 GHz to 150 GHz.

8. Device according to one of the preceding claims, **characterized in that** the radiation is emitted in a pulsed, amplitude-modulated, phase-modulated or frequency-modulated manner.

## Revendications

1. Dispositif de localisation d'objets (14) avec un dispositif de transport (12), avec un émetteur (18-1, 18-2; 18; 118) pour émettre un rayonnement électromagnétique dans le domaine des radiofréquences par une antenne d'émission (20-1, 20-2; 20; 120), avec un récepteur (22-1, 22-2; 122) pour recevoir le rayonnement réfléchi sur l'objet et générer des signaux reçus, avec au moins une antenne de réception (24-1, 24-2); 124) sous la forme d'un réseau phasé, qui reçoit un rayonnement d'au moins deux lobes de réception spécifiques (26-1, 26-2; 126-1, 126-2, 126-3) et les signaux reçus (36-1, 36-2; 136-1, 136-2, 136-3) sont détectables individuellement de chaque lobe de réception, les directions longitudinales des lobes de réception étant alignées transversalement à la direction de transport (16) et les lobes de réception (26-1, 26-2; 126-1, 126-2, 126-3) se chevauchent partiellement dans la direction de transport (16) et les signaux reçus (36-1, 36-2; 136-1, 136-2, 136-3) sont détectés individuellement des différents lobes de réception de l'antenne de réception (24-1, 24-2; 124) successivement dans le temps, le mouvement de transport de l'objet (14) étant lent par rapport au taux de détection, de sorte que l'objet est détecté fréquemment lorsqu'il traverse un lobe de réception, et un dispositif d'évaluation (30) est prévu qui comporte une unité de localisation (38) pour évaluer les deux signaux reçus (36-1, 36-2; 136-1, 136-2 et 136-3, respectivement) des deux lobes de réception (26-1, 26-2; 126-1, 126-2 et 126-3, respectivement) et déterminer le moment auquel l'objet (14) est situé dans la région de recouvrement des deux lobes de réception (26-1, 26-2; 126-1, 126-2 et 126-3, respectivement).

2. Dispositif selon la revendication 1, **caractérisé en ce que** l'antenne d'émission émet le rayonnement dans l'espace dans les lobes d'émission et les lobes d'émission sont conçus de la même manière que les lobes de réception et les antennes d'émission et de réception sont situées essentiellement au même endroit de sorte que les lobes d'émission et de réception se recouvrent pratiquement complètement.

3. Dispositif selon l'une des revendications précédentes, **caractérisé en ce qu'**une antenne est associée à chaque lobe de réception ou d'émission.

4. Dispositif selon l'une des revendications précédentes, **caractérisé en ce que** les différents lobes de réception et/ou de transmission diffèrent dans la polarisation du rayonnement.

5. Dispositif selon l'une des revendications précédentes, **caractérisé en ce que** l'évolution temporelle des signaux reçus est détectée à partir des lobes de réception individuels.

6. Dispositif selon l'une des revendications précédentes, **caractérisé en ce que** l'antenne de réception ou d'émission présente une pluralité d'éléments d'antenne qui émettent chacun un rayonnement, le rayonnement des éléments d'antenne ayant une relation de phase spécifique les uns par rapport aux autres, de sorte que le lobe récepteur ou émetteur présente une orientation souhaitée.

7. Dispositif selon l'une des revendications précédentes, **caractérisé en ce que** le rayonnement se situe dans la gamme de 1 GHz à 150 GHz.

8. Dispositif selon l'une des revendications précédentes, **caractérisé en ce que** le rayonnement est émis de manière puisée, modulée en amplitude, modulée en phase ou modulée en fréquence.
